# EUROPÄISCHE PATENTANMELDUNG

(11) **EP 3 984 697 A1**
(43) Veröffentlichungstag der Anmeldung: **20.04.2022**
(21) Anmeldenummer: 20020475.8
(22) Anmeldetag: 15.10.2020
(51) Int. Cl.: B24C 1/00, B24C 9/00, B33Y 80/00

(54) **VORRICHTUNG UND VERFAHREN ZUM REINIGEN VON OBERFLÄCHEN MITTELS CO2-PARTIKELN**

(71) Anmelder: Linde GmbH, 82049 Pullach (DE)
(72) Erfinder: Bauer, Dominik, 82110 Germering (DE); Wagner, Fabian, 82393 Iffeldorf (DE)
(74) Vertreter: Gellner, Bernd

(57) **Zusammenfassung**

Erfindungsgemäß ist eine Vorrichtung zum Reinigen von Oberflächen, insbesondere von Prozesskammern zur additiven Fertigung, mittels eines CO₂-Partikelstrahls vorgesehen. Diese Vorrichtung umfasst eine Düseneinrichtung zum Ausgeben von CO₂-Partikeln in einer Reinigungsrichtung. Weiterhin zeichnet sich die Vorrichtung dadurch aus, dass eine Absaugeinrichtung vorgesehen ist, die mit der Düseneinrichtung mechanisch gekoppelt ist und die zum Erzeugen eines Unterdrucks ausgebildet ist, sodass gelöste Schmutzpartikel mittels eines entsprechenden Volumenstroms in einem Absaugbereich absaugbar sind.

## Beschreibung

Die Erfindung betrifft eine Vorrichtung und ein Verfahren zum Reinigen von Oberflächen, insbesondere bei einer additiven Fertigung, mittels CO₂-Partikeln.

Additive Fertigung, Additive Manufacturing (AM), Generative Fertigung oder auch Rapid-Technologien umfassen Fertigungsverfahren, bei denen Material Schicht für Schicht aufgetragen und so dreidimensionale Gegenstände (Werkstücke) erzeugt werden. Dabei erfolgt der schichtweise Aufbau computergesteuert aus einem oder mehreren flüssigen oder festen Werkstoffen nach vorgegebenen Maßen und Formen. Beim Aufbau finden physikalische oder chemische Härtungs- oder Schmelzprozesse statt. Typische Werkstoffe für das 3D-Drucken sind Kunststoffe, Kunstharze, Keramiken und Metalle.

Zum Reinigen der Oberflächen von Oberflächen im industriellen Bereich sind unterschiedlichste chemische und physikalische Reinigungsverfahren bekannt.

Chemische Reinigungsverfahren erfordern aufgrund der dort verwendeten oft aggressiven Mittel und aufgrund gesetzlicher Vorschriften einen hohen Aufwand an Sicherheits- und Entsorgungseinrichtungen. Daher ist es bei den physikalischen Reinigungsverfahren, bei denen die Verunreinigungen in der Regel durch Beschuss oder Bestrahlung der zu reinigenden Oberfläche mit Sand-, Metall- oder Glaspartikeln entfernt werden, erforderlich, dass das Reinigen selbst in gesonderten Kabinen durchgeführt wird. Hierfür muss das zu reinigende Bauteil zunächst aus der entsprechenden Maschine ausgebaut und in eine solche Kabine eingelegt werden.

Eine weitere Alternative besteht darin, Bauteile mittels Beschuss durch CO₂-Partikel, auch Trockeneis oder -schnee genannt, zu reinigen. Beim Trockeneis handelt es sich um in den festen Aggregatzustand überführtes und auf mindestens -78,5°C gekühltes Kohlendioxid. Trockenschnee geht unter Atmosphärendruck unmittelbar vom festen Aggregatzustand in den gasförmigen über, wobei keine Schmelzflüssigkeit entsteht. Dadurch kann auf besonders einfache Weise, nämlich mit normaler Druckluft, sowohl der Beschuss mit Trockeneis als auch die Absaugung und Abfuhr der Schmutzpartikel erfolgen.

Trockeneis liegt bei der Produktion in Form von Schnee vor. Die Erzeugung von Schnee vor Ort mittels einer Düse aus flüssigem CO₂ und die direkte Bestrahlung einer Oberfläche mit diesem Schnee, ggf. mit Unterstützung von Druckluft, ist verfahrenstechnisch vergleichsweise einfach zu handhaben und leicht zu automatisieren.

In der DE 10 2008 037 089 A1 sind eine Vorrichtung und ein Verfahren zum Reinigen von Gegenständen mittels Trockenschnee offenbart.

Die Aufgabe der vorliegenden Erfindung besteht darin, eine Vorrichtung und ein Verfahren zu schaffen, mit denen die Effizienz beim Reinigen mit CO₂-Partikeln gesteigert werden kann.

Insbesondere besteht die Aufgabe der Erfindung darin, eine Vorrichtung und ein Verfahren zur cryogenen Reinigung von Oberflächen mittels CO₂-Partikeln anzugeben, bei dem eine Verunreinigung der Umgebung durch gelöste Schmutzpartikel minimiert wird.

Eine weitere Aufgabe der vorliegenden Erfindung besteht darin, eine Vorrichtung und ein Verfahren zur cryogenen Reinigung eines Bauraumes bzw. einer Prozesskammer zur addititven Fertigung mittels CO₂-Partikeln anzugeben

Eine oder mehrere dieser Aufgaben werden durch eine Vorrichtung gemäß Anspruch 1 und ein Verfahren gemäß Anspruch 11 gelöst.

Erfindungsgemäß ist eine Vorrichtung zum Reinigen von Oberflächen, insbesondere bei einer additiven Fertigung, mittels eines CO₂-Partikelstrahls vorgesehen. Diese Vorrichtung umfasst eine Düseneinrichtung zum Ausgeben von CO₂-Partikeln in einer Reinigungsrichtung. Weiterhin zeichnet sich die Vorrichtung dadurch aus, dass eine Absaugeinrichtung vorgesehen ist, die mit der Düseneinrichtung mechanisch gekoppelt ist und die zum Erzeugen eines Unterdrucks ausgebildet ist, sodass gelöste Schmutzpartikel und gasförmiges CO₂ mittels eines entsprechenden Volumenstroms in einem Absaugbereich absaugbar sind.

Durch den Aufprall auf einer zu reingenden Oberfläche sublimieren die CO₂-Partikel unter einer Volumenzunahme zu CO₂-Gas. Dadurch, dass die Vorrichtung zum Reinigen von Oberflächen mittels eines CO₂-Partikelstrahls eine Absaugeinrichtung aufweist, wird das gasförmige CO₂ abgesaugt, wodurch der Einsatz einer Kabine oder eines Absaugtisches vermieden wird. CO₂ ist aus Sicht der Arbeitssicherheit mit vorsicht zu behandeln, da eine erhöhte Konzentration gesundheitsschädlich ist. Die Absaugeinrichtung verhindert das.

Unter der Reinigungsrichtung wird, im Rahmen der vorliegenden Erfindung eine Richtung verstanden, die sich in etwa parallel zur Oberfläche eines zu reinigenden Gegenstands erstreckt und die die Richtung beschreibt, in der die Vorrichtung über die Oberfläche bewegt wird.

Die Kombination aus Reinigungseinrichtung und Absaugeinrichtung bewirkt, dass die Reinigungswirkung deutlich verbessert wird, da sich durch den CO₂-Partikelstrahl gelöste Schmutzpartikel nicht verteilen können, sondern direkt mittels der Absaugeinrichtung abgesaugt werden.

Durch dieses rückstandslose Entfernen von Verunrenigungen, wird das Risiko von Querkontaminationen nachhaltig gesenkt. Dies ist insbesondere für nachfolgende Arbeitsschritte von Vorteil, wodurch die Qualität von Produkten erhöht wird.

Durch dieses kombinierte Reinigungsverfahren ist ein schnelleres und präziseres Arbeiten möglich, was Ressourcen, Zeit und damit auch Geld einspart.

Additive Fertigung, Additive Manufacturing (AM), Generative Fertigung oder auch Rapid-Technologien umfassen Fertigungsverfahren, bei denen Material Schicht für Schicht aufgetragen und so dreidimensionale Gegenstände (Werkstücke) erzeugt werden. Für diese Fertigungsverfahren ist erfindungsgemäß vorgesehen Oberflächen in Bauräumen bzw. in entsprechenden Prozesskammern mit CO₂ Feststoff bzw. Partikeln zu reinigen. Hierdurch können Prozesskammern, nach dem Sublimieren des Feststoffes, rückstandsfrei gesäubert werden. Dabei wird die Düseneinrichtung zum Ausgeben von CO₂-Partikeln (Strahldüse) verwendet, um aus flüssigem CO₂ einen CO₂ Feststoff zu generieren und mit Druckluft auf eine Oberfläche zu beschleunigen.

Kombiniert man dies mit deer Absaugeinrichtung kann man gleichzeitig das sich lösende Pulver entfernen und zusammen mit dem Trockeneis absaugen.

Eine zu reinigende Oberfläche bei der additiven Fertigung kann im Rahmen der vorliegenden Erfindung eine Fläche einer Vorrichtung zur additiven Fertigung sein. Insbesondere kann es sich um eine Fläche eines Bauraumes, einer Bauplattform oder einer Prozesskammer handeln. Hierbei kann ein offener Baurum, ein teilweise geschlossener Bauraum oder ein geschlossener Bauraum zu additiven Fertigung vorgesehen sein.

Bei der Reinigung von Prozesskammern zur additiven Fertigung, bspw. beim pulverbettbasierten Laser Strahlschmelzen, sollte die Anlage möglichst rückstandsfrei von allen Pulverresten befreit werden. Durch statische Aufladung oder mechanisches Anhaften können kleine Partikel an Wänden oder Decke bzw. auf Substratplatten der Additive Manufacturing Maschinen anheften. Das Entfernen erfolgt derzeit meist durch einen Staubsauger und mit Bürsten per Hand oder durch wischen mit alkoholgetränkten Tüchern.

Die Erfinder der vorliegenden Erfindung haben erkannt, dass mit diesem Reinigungsverfahren die Partikel bzw. Pulverrückstände teilweise nur hin und her gewischt werden und besonders in den Ecken der Prozesskammer ein rückstandsloses Reinigen nur schwer möglich ist, Dadurch sind deratuge Prozesse äußerst zeitintensiv. Zudem besteht bei einem Materialwechsel die Gefahr der Kontamination durch Fremdpartikel.

Bei der additven Fertigung, insbesondere bei pulverbettbasierten Verfahren, kommt es somit zu schmauch- und partikelbehafteten Oberflächen in der Prozesskammer, wobei durch Verdampfung ein Materialniederschlag durch Kondensation erfolgt.

Mittels der vorliegenden Erfindung ist eine effizientere und verbesserte mechanische Entfernung von Pulver in der Prozesskammer möglich, die ein schnelleres und präziseres Arbeiten ermöglicht. Durch das rückstandslose Entfernen von Pulvern und Kondensaten sinkt nachhaltig dabei das Risiko von Querkontamination.

Weiterhin sind auch Ecken, Hinterschneidungen oder Spalte in der Prozesskammer bearbeitbar und der Arbeitskomfort des Mitarbeiters steigt. Da kein Wasser oder Staub durch den Reinigungsprozess eingebracht wird, sinkt das Risiko von Prozessverzögerungen und ein schnellerer Arbeitsbeginn ist möglich.

Die vorliegende Erfindung ist somit für nahezu alle Stahlschmelzanlagen geeignet, die höchste Ansprüche an Kontaminationsfreiheit und kürzeren Wartungszeiten haben.

Die mechanische Koppelung der Absaugeinrichtung und der Düseneinrichtung kann über eine Abstandshalteeinrichtung erfolgen.

Hierbei können verschiedene Halterungen konstruiert werden, um die gängigsten Absaugeinrichtungen abzudecken, bzw. diese erfindungsgemäß verwenden zu können. Dies bietet höchste Flexibilität in Verbindung mit einer Düseneinrichtung bzw. einer Strahlanlage bei verschiedenen Anwendungen.

Die Absaugeinrichtung und die Düseneinrichtung können auch koaxial zueinander angeordnet sein, wobei die Düseneinrichtung zentral angeordnet ist und die Absaugeinrichtung diese konzentrisch umgebend angeordnet ist, sodass die Absaugeinrichtung und die Düseneinrichtung mechanisch miteinander gekoppelt sind.

Die Düseneinrichtung umfasst vorzugsweise einen Zuführkanal zum Zuführen des flüssigen CO₂, einen Expansionsabschnitt zum Erzeugen von CO₂-Partikeln aus dem flüssigen CO₂, wobei das CO₂ im Expansionsabschnitt expandiert und in CO₂-Partikel, vorzugsweise CO₂-Schnee, und gasförmiges CO₂ umgewandelt wird, und eine Düse zum Ausgeben der CO₂-Partikel.

Um die CO₂-Partikel zu beschleunigen kann die Düseneinrichtung eine Druckluftleitung zum Zuführen von Druckluft aus einer externen Quelle, beispielsweise einer Kompressoreinrichtung oder einer Druckluftversorgungsleitung, aufweisen.

Aufgrund der höheren Geschwindigkeit der CO₂-Partikel wird eine verbesserte Reinigungswirkung erzielt.

Weiterhin kann der Zuführkanal zum Zuführen von vorproduziertem CO₂ ausgebildet sein, wobei beispielsweise CO₂- Pellets oder -Granulat vorgesehen sind.

Zudem kann eine Einrichtung zur Vorkühlung des CO₂ an einem unterkühlten Düsenaustritt des Zuführkanals vorgesehen sein, wodurch eine Effizienzsteigerung der CO₂ Partikel möglich wird.

Die Düseneinrichtung kann den CO₂-Partikelstrahl im Wesentlichen in einer in Axialrichtung der Düseneinrichtung verlaufenden Hauptstrahlrichtung abgeben, wobei diese Hauptstrahlrichtung gegenüber einer Oberfläche eines zu reinigenden Gegenstands in Reinigungsrichtung in einem Winkel von zumindest 10° oder 15° oder 20° oder 25° und maximal in einem Winkel von 30° bis75° bzw. 25° bis 65° bzw. 35° bis55° geneigt ist.

Die Absaugeinrichtung kann den Volumenstrom im Wesentlichen in einer in Axialrichtung der Absaugeinrichtung verlaufenden Hauptabsaugrichtung abgeben, wobei diese Hauptabsaugrichtung gegenüber der Oberfläche eines zu reinigenden Gegenstands entgegen der Reinigungsrichtung in einem Winkel zwischen 15°-75° bzw. 25°-65° bzw. 35°-55° geneigt ist.

Weiterhin kann die Düseneinrichtung eine Düsenöffnung und die Absaugeinrichtung eine Absaugöffnung aufweisen, die mittels einer Abstandshalteeinrichtung einen Abstand in horizontaler Richtung von maximal 0,5 cm oder 1 cm oder 2 cm oder 5 cm - oder 7,5 cm oder 10 cm oder 15 cm zueinander aufweisen, wobei der Abstand vorzugsweise einstellbar ist. Der Abstand kann im Hinblich auf die Strahlformung der Düseneinrichtung gewählt werden, wobei dieser nicht zu groß sein sollte, um eine kompakte Ausbildung der Vorrichtung zu ermöglichen.

Durch die Wahl des Winkels der Hauptstrahlrichtung bzw. der Hauptsaugrichtung gegenüber der Oberfläche des zu reinigenden Gegenstands und der geeigneten Einstellung des Abstands der Düsenöffnung bzw. Absaugöffnung zueinander wird die Effektivität des gesamten Reinigungsverfahren maximiert. Die Einstellung kann beispielsweise manuell mittels einer Flügelmutter oder eines Spannverschlusses verändert werden, um diesen an die jeweiligen Betriebsbedingungen anzupassen.

Insbesondere wird dadurch sichergestellt, dass die Reinigungsleistung nicht durch den Absaugvorgang negativ beeinträchtigt wird.

Sofern die Düseneinrichtung und die Absaugeinrichtung koaxial zueindaer angeordnet sind, sind diese vorzugsweise nur geringfügig voneinander beabstandet, sodass eine effiziente Absaugung von Verunreinigungen möglich ist. Die vorstehend aufgezeigten Abstände können jedoch auch hier vorgesehen sein.

Die Vorrichtung weist vorzugsweise eine Steuereinrichtung auf, die einen Volumenstrom der Düseneinrichtung aus Druckluft, gasförmigem CO₂ und CO₂-Partikeln und den Volumenstrom der Absaugeinrichtung automatisch steuert.

Die Vorrichtung ist vorzugsweise zum gleichzeitigen Reinigen und Absaugen ausgebildet, wobei die Absaugeinrichtung entweder vor und/oder hinter und/oder seitlich neben der Düseneinrichtung in Reinigungsrichtung und/oder konzentrisch um die Düseneinrichtung herum angeordnet sein kann.

Durch das gleichzeitige Reinigen und Absaugen, ist für den Anwender sichergestellt, dass kein zusätzlicher Arbeitsschritt zum Entfernen des Schmutzes nötig ist. Zudem ist die notwendige Arbeitssicherheit jederzeit gewährleistet.

Gemäß einem erfindungsgemäßen Verfahren zum Reinigen von Oberflächen, insbesondere bei einer additiven Fertigung, mittels eines CO₂-Partikelstrahls, insbesondere mit einer vorstehend erläuterten Vorrichtung, ist vorgesehen, einer Düseneinrichtung über einen Zuführkanal flüssiges CO₂ zuzuführen und das CO₂ in einem Expansionsabschnitt zu expandieren und dabei zu CO₂-Partikeln und gasförmigem CO₂ umzuwandeln, wobei eine Absaugeinrichtung einen Unterdruck erzeugt, sodass ein entsprechender Volumenstrom bereitgestellt wird, um gelöste Schmutzpartikel in einem Absaugbereich abzusaugen.

Mittels einer Einrichtung zum Vorkühlen kann die Entstehung von gasförmigem CO₂ im Expansionsabschnitt reduziert werden.

Die Vorteile der vorstehend beschriebenen Vorrichtung gelten analog für das entsprechende Verfahren.

Weitere Aufgaben, Merkmale und Vorteile der vorliegenden Erfindung werden aus der Beschreibung der beispielhaften Ausführungsform ersichtlich, die in der beigefügten Zeichnung dargestellt ist. Diese zeigt in:

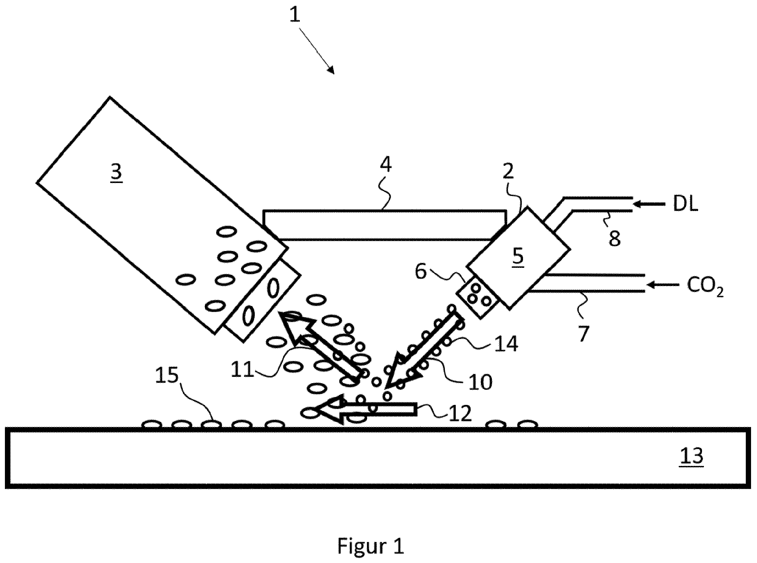

Fig.1 eine schematische Darstellung einer erfindungsgemäßen Vorrichtung gemäß einem ersten Ausführungsbeispiel.

Im Folgenden wird eine erfindungsgemäße Vorrichtung 1 zum Reinigen von Oberflächen 13 einer Prozesskammer bei einer additiven Fertigung mittels CO₂-Partikeln 14 anhand eines ersten Ausführungsbeispiels näher beschrieben (Fig.1).

Die erfindungsgemäße Vorrichtung 1 umfasst eine Düseneinrichtung 2 und eine Absaugeinrichtung 3.

Die Düseneinrichtung 2 weist einen Düsenkörper 5 und eine Düse 6 auf.

An den Düsenkörper 5 der Düseneinrichtung 2 ist ein Zuführkanal 7 zum Zuführen von flüssigem CO₂ angeschlossen, der in einen Expansionsabschnitt (nicht dargestellt) des Düsenkörpers 5 mündet.

Der Zuführkanal 7 ist mit einer flüssig CO₂-Quelle (nicht dargestellt) zum Bereitstellen von flüssigem CO₂ verbunden.

Über den Zuführkanal 7 kann dem Düsenkörper 5 auch festes CO₂, wobei insbesondere CO₂-Schnee, -Pellets oder -Granulat vorgesehen sind, zugeführt werden.

Im Expansionsabschnitt (nicht dargestellt) des Düsenkörpers 5 expandiert das flüssige CO₂ zur Düse 6 hin und wird in CO₂-Partikel 14 und gasförmiges CO₂ umgewandelt.

Die CO₂-Partikel 14 werden an der Düse 6 in einer Hauptstrahlrichtung 10 bevorzugt axial zu Düsenkörper 5 und Düse 6 ausgegeben.

Zudem ist die Düseneinrichtung 2 mit einer Druckluftleitung 8 zum Zuführen von Druckluft verbunden, die in den Expansionsabschnitt (nicht dargestellt) des Düsenkörpers 5 mündet.

Die Druckluftleitung 8 ist mit einer externen Quelle (nicht dargestellt) zum Bereitstellen von Druckluft verbunden, beispielsweise einer Kompressoreinrichtung oder einer Druckluftversorgungsleitung.

Der Düsenkörper 5 und die Düse 6 können durch eine Laval- und/ oder eine Venturidüse realisiert werden (nicht dargestellt).

Im Düsenkörper 5 kann eine Lavaldüse angeordnet sein, an die der Zuführkanal 7 angeschlossen ist und durch die die Druckluft und das flüssige CO₂ hindurchgeleitet und beschleunigt werden. Die Lavaldüse umfasst den Expansionsabschnitt, in dem das flüssige CO₂ zu CO₂-Partikeln 14, vorzugsweise CO₂-Schnee, expandiert. Weiterhin kann die Lavaldüse von einer Venturidüse umschlossen sein, und deren Querschnittsverengung die Düse 6 ausbildet. Im Mündungsbereich der Venturidüse werden die Druckluft, das flüssige CO₂ und das Abrasiv zusammengeführt und danach als ein Reinigungsstrahl 14 in der Hauptstrahlrichtung 10 ausgegeben.

Bezüglich der Laval- und Venturidüse und der Abrasivstoff-Zufuhr wird auf die DE 10 2008 037 089 A1 verwiesen, auf die hiermit vollinhaltlich Bezug genommen wird.

Die Düseneinrichtung 2 weist die in einer Axialrichtung der Düseneinrichtung 2 verlaufende Hauptstrahlrichtung 10 auf, in der die CO₂-Partikel im Wesentlichen abgegeben werden.

Die Hauptstrahlrichtung 10 ist in Axialrichtung der Düseneinrichtung 2 im Wesentlichen in einer Reinigungsrichtung 12 auf eine Oberfläche des zu reinigenden Gegenstands 13 gerichtet.

Die Hauptstrahlrichtung 10 ist gegenüber der Oberfläche des zu reinigenden Gegenstands 13 bzw. der Reinigungsrichtung 12 in einem Winkel zwischen 15° bis 75° bzw. 25° bis 65° bzw. 35° bis 55° geneigt.

Die Absaugeinrichtung 3 weist eine in einer Axialrichtung der Absaugeinrichtung 3 verlaufende Hauptabsaugrichtung 11 auf, in der die Schmutzpartikel 15 im Wesentlichen abgesaugt werden.

Die Hauptabsaugrichtung 11 ist in Axialrichtung der Absaugeinrichtung 3 im Wesentlichen entgegen der Reinigungsrichtung 12 auf die Oberfläche des zu reinigenden Gegenstands 13 gerichtet.

Die Hauptabsaugrichtung 11 ist gegenüber der Oberfläche des zu reinigenden Gegenstands 13 bzw. der entgegen verlaufenden Reinigungsrichtung in einem Winkel zwischen 15° bis 75° bzw. 25° bis 65° bzw. 35° bis 55° geneigt.

Die Düseneinrichtung 2 und die Absaugeinrichtung 3 sind über eine Abstandshalteeinrichtung 4 mechanisch gekoppelt.
An der Abstandshalteeinrichtung 4 sind jeweils der Düsenkörper 5 und ein Gehäuse der Absaugeinrichtung 3 beispielsweise mittels Flügelmuttern oder Spannverschlüssen (nicht dargestellt) angebracht.

Der Abstand einer Düsenöffnung der Düseneinrichtung 2 und einer Absaugöffnung der Absaugeinrichtung 3 in horizontaler Richtung ist an der Abstandshalteeinrichtung 4 einstellbar (nicht dargestellt).

Der Abstand zwischen der Düsenöffnung der Düseneinrichtung 2 und der Absaugöffnung der Absaugeinrichtung 3 in horizontaler Richtung liegt im Bereich zwischen 0,5-5 cm.

Die Düseneinrichtung 2 und die Absaugeinrichtung 3 können in einem gemeinsamen Gehäuse integriert sein (nicht dargestellt).

Vorzugsweise ist die Absaugeinrichtung 3 in Reinigungsrichtung 12 vor der Düseneinrichtung 2 angeordnet.

Die Absaugeinrichtung 3 kann alternativ auch die Düseneinrichtung 2 konzentrisch umgebend ausgebildet sein oder in Reinigungsrichtung 12 hinter oder seitlich neben der Düseneinrichtung 2 angeordnet sein, um in diesem(n) Bereich(en) abzusaugen.

Nachfolgend wird ein Verfahren der vorstehend beschriebenen Vorrichtung 1 zum Reinigen von Oberflächen 13 mittels CO₂-Partikeln 14 erläutert.

Der Düseneinrichtung 2 wird über den Zuführkanal 7 Kohlenstoffdioxid (CO₂) und über die Druckluftleitung 8 Druckluft (DL) zugeführt.

Gegebenenfalls kann der Düseneinrichtung 2 über die Abrasivstoff-Leitung 9 ein abrasives oder nicht-abrasives Additiv (A) zugeführt werden.

Im Expansionsabschnitt des Düsenkörpers 5 innerhalb der Düseneinrichtung 2 (nicht dargestellt) entsteht aus dem CO₂ und der Druckluft (und dem abrasiven oder nichtabrasiven Additiv) ein Gemisch aus CO₂-Schnee und Druckluft (und Abrasiv).
Das Gemisch wird als Reinigungsstrahl 14 im Wesentlichen in der Reinigungsrichtung 12 an der Düse 6 ausgegeben.

Der Reinigungsstrahl 14 wird im Wesentlichen in Reinigungsrichtung 12 in einem vorbestimmten Winkel von vorzugsweise in etwa 35° auf die Oberfläche des zu reinigenden Gegenstands 13 gerichtet.

Die CO₂-Partikel 14 lösen Schmutzpartikel 15 von der Oberfläche des zu reinigenden Gegenstands 13 und wirbeln diese auf.

Die Absaugeinrichtung 3 saugt die entstandenen Schmutzpartikel 15 im Wesentlichen entgegen der Reinigungsrichtung 12 in einem Winkel von vorzugsweise in etwa 35° direkt ab.

Die Absaugeinrichtung 3 ist vorzugsweise in Reinigungsrichtung 12 vor der Düseneinrichtung 2 angeordnet. Der Winkel der Hauptstrahlrichtung 10 der Düseneinrichtung 2 gegenüber der Oberfläche des zu reinigenden Gegenstands 13 liegt idealerweise im Bereich zwischen 25°-45°. Der Winkel der Hauptabsaugrichtung 11 der Absaugeinrichtung 3 gegenüber der Oberfläche des zu reinigenden Gegenstands 13 liegt idealerweise im Bereich zwischen 25°-45°. Damit lassen sich die Schmutzpartikel ideal in Reinigungsrichtung 12 bewegen und die aufgewirbelten Schmutzpartikel 15 entgegen der Reinigungsrichtung 12 absaugen.

Der Anwender kann die Düseneinrichtung 2 und Absaugeinrichtung 3 aufgrund der mechanischen Kopplung durch die Abstandshalteeinrichtung 4 gleichzeitig an einer Halteeinrichtung (nicht dargestellt) halten und bedienen.

Gemäß einem zweiten Ausführungsbeispiel (nicht dargestellt) der vorliegenden Erfindung, das sämtliche technischen Merkmale des erstens Ausführungsbeispiels umfasst sofern nichts anderes beschrieben ist, sind die Absaugeinrichtung 3 und die Düseneinrichtung 2 koaxial zueinander angeordnet.

Die Düseneinrichtung 2 ist hierbei vorzugsweise zentral angeordnet und die Absaugeinrichtung 3 ist diese konzentrisch umgebend angeordnet. Auf diese Weise sind die Absaugeinrichtung 3 und die Düseneinrichtung 2 mechanisch miteinander gekoppelt.

Allfällige Einrichtungen zum Absperren und Regulieren der Volumenströme und zum Justieren der einzelnen Teile sind in der Figur nicht näher dargestellt. Ihre Ausführung wird der Fachmann den Gegebenheiten anpassen.

Weiterhin ist erfindungsgemäß eine Vorrichtung zur additiven Fertigung mit einer Vorrichtung zum Reinigen von Prozesskammern zur additiven Fertigung gemäß gemäß den vorstehenden Ausführungen vorgesehen.

Gemäß einem Verfahren zum Reinigen von Oberflächen, insbesondere bei der additiven Fertigung, mittels eines CO2-Partikelstrahls sind die folgenden Schritte vorgesehen:
Zuführen von flüssigem CO₂ einer Düseneinrichtung 2 über einen Zuführkanal 7; Expandieren des CO₂ in einem Expansionsabschnitt, wobei dieses dabei zu CO₂-Partikeln und gasförmigem CO₂ umgewandelt wird;
Erzeugen eines Unterdrucks mittels ein Absaugeinrichtung 3, sodass ein entsprechender Volumenstrom bereitgestellt wird, um gelöste Schmutzpartikel in einem Absaugbereich einer Prozesskammer zur additiven Fertigung abzusaugen.

Hierbei ist vorgesehen. dass die Düseneinrichtung 2 den CO₂-Partikelstrahl im Wesentlichen in einer in Axialrichtung der Düseneinrichtung 2 verlaufenden Hauptstrahlrichtung abgibt, wobei diese Hauptstrahlrichtung gegenüber einer Oberfläche des zu reinigenden Gegenstands in Reinigungsrichtung einen Winkel im Bereich von 15° bis 75° bzw. 25° bis 65° bzw. 35° bis 55° aufweist.

Gemäß einer besonders vorteilhaften Ausführungsform ist vorgesehen, dass die Absaugeinrichtung 3 den Volumenstrom im Wesentlichen in einer in Axialrichtung der Absaugeinrichtung 3 verlaufenden Hauptabsaugrichtung abgibt, wobei diese Hauptabsaugrichtung gegenüber der Oberfläche des zu reinigenden Gegenstands entgegen der Reinigungsrichtung einen Winkel im Bereich von 15° bis 75° bzw. 25° bis 65° bzw. 35° bis 55° aufweist.

### Bezugszeichenliste

- 1: Vorrichtung
- 2: Düseneinrichtung
- 3: Absaugeinrichtung
- 4: Abstandshalteeinrichtung
- 5: Düsenkörper
- 6: Düse
- 7: Zuführkanal für CO₂
- 8: Druckluftleitung
- 9:
- 10: Hauptstrahlrichtung
- 11: Hauptabsaugrichtung
- 12: Reinigungsrichtung
- 13: zu reinigender Gegenstand
- 14: Reinigungsstrahl (CO₂-Partikel)
- 15: Schmutzpartikel

## Patentansprüche

1. Vorrichtung zum Reinigen von Oberflächen, insbesondere bei einer additiven Fertigung, mittels eines CO₂-Partikelstrahls, umfassend eine Düseneinrichtung (2) zum Ausgeben von CO₂-Partikeln (14) in einer Reinigungsrichtung (12),
**dadurch gekennzeichnet,**
**dass** eine Absaugeinrichtung (3) vorgesehen ist, die mit der Düseneinrichtung (2) mechanisch gekoppelt ist und die zum Erzeugen eines Unterdrucks ausgebildet ist, sodass gelöste Schmutzpartikel (15) mittels eines entsprechenden Volumenstroms in einem Absaugbereich absaugbar sind.

2. Vorrichtung gemäß Anspruch 1, **dadurch gekennzeichnet,**
**dass** die Absaugeinrichtung (3) und die Düseneinrichtung (2) koaxial zueinander angeordnet sind, wobei die Düseneinrichtung (2) zentral angeordnet ist und die Absaugeinrichtung (3) diese konzentrisch umgebend angeordnet ist, sodass die Absaugeinrichtung (3) und die Düseneinrichtung (2) mechanisch miteinander gekoppelt sind.

3. Vorrichtung gemäß Anspruch 1, **dadurch gekennzeichnet,**
**dass** die mechanische Koppelung der Absaugeinrichtung (3) mit der Düseneinrichtung (2) über eine Abstandshalteeinrichtung (4) erfolgt.

4. Vorrichtung gemäß einem der Ansprüche 1 bis 3, **dadurch gekennzeichnet,**
**dass** die Düseneinrichtung (2) ausgebildet ist, um aus flüssigem CO₂, welches von einer externen Quelle bereitgestellt wird, CO₂-Partikel zu erzeugen, wobei die Düseneinrichtung (2) umfasst einen Zuführkanal (7) zum Zuführen des flüssigen CO₂, einen Expansionsabschnitt zum Erzeugen von CO₂-Partikeln aus dem flüssigen CO₂, wobei das CO₂ im Expansionsabschnitt expandiert und in CO₂-Partikelund gasförmiges CO₂ umgewandelt wird, und eine Düse (6) zum Ausgeben der CO₂-Partikel.

5. Vorrichtung gemäß Anspruch 4, **dadurch gekennzeichnet,**
**dass** die Düseneinrichtung eine Druckluftleitung zum Zuführen von Druckluft aus einer externen Quelle aufweist, um die CO₂-Partikel zu beschleunigen.

6. Vorrichtung gemäß Anspruch 1, **dadurch gekennzeichnet,**
**dass** die Düseneinrichtung einen Zuführkanal zum Zuführen von festem CO₂ aufweist, wobei insbesondere CO₂-Schnee, -Pellets oder -Granulat vorgesehen sind.

7. Vorrichtung gemäß einem der Ansprüche 1 bis 6, **dadurch gekennzeichnet,**
**dass** die Düseneinrichtung (2) den CO₂-Partikelstrahl (14) im Wesentlichen in einer in Axialrichtung der Düseneinrichtung (2) verlaufenden Hauptstrahlrichtung (10) abgibt, wobei diese Hauptstrahlrichtung (10) gegenüber einer Oberfläche eines zu reinigenden Gegenstands in Reinigungsrichtung (12) in einem Winkel zwischen 15° bis75° oder 25° bis 65° oder 35° bis 55° geneigt ist.

8. Vorrichtung gemäß einem der Ansprüche 3 bis 7, **dadurch gekennzeichnet,**
**dass** die Absaugeinrichtung den Volumenstrom im Wesentlichen in einer in Axialrichtung der Absaugeinrichtung verlaufenden Hauptabsaugrichtung abgibt, wobei diese Hauptabsaugrichtung gegenüber der Oberfläche des zu reinigenden Gegenstands entgegen der Reinigungsrichtung in einem Winkel zwischen 15°bis 75° ode 25°bis 65° oder 35°-55° geneigt ist.

9. Vorrichtung gemäß einem der Ansprüche 3 bis 8, **dadurch gekennzeichnet,**
**dass** eine Düsenöffnung der Düseneinrichtung (2) und eine Absaugöffnung der Absaugeinrichtung (3) mittels der Abstandshalteeinrichtung einen Abstand in horizontaler Richtung von 0,5 bis5 cm zueinander aufweisen, wobei der Abstand vorzugsweise einstellbar ist.

10. Vorrichtung gemäß Anspruch 1 und 2, **dadurch gekennzeichnet,**
**dass** die Vorrichtung (1) eine Steuereinrichtung aufweist, die ausgebildet ist, um vorzugsweise einen Volumenstrom der Düseneinrichtung aus Druckluft, gasförmigem CO₂ und CO₂-Partikeln und den Volumenstrom der Absaugeinrichtung zu steuern.

11. Vorrichtung gemäß einem der Ansprüche 1 bis 10, **dadurch gekennzeichnet,**
**dass** die Vorrichtung (1) ausgebildet ist, um gleichzeitig zu Reinigen und Abzusaugen, wobei die Absaugeinrichtung entweder vor und/oder hinter und/oder seitlich neben der Düseneinrichtung in Reinigungsrichtung und/oder konzentrisch um die Düseneinrichtung herum angeordnet ist.

12. Vorrichtung zur additiven Fertigung mit einer Vorrichtung zum Reinigen von Oberfläche bei der additiven Fertigung gemäß einem der Ansprüche 1 bis 11.

13. Verfahren zum Reinigen von Oberflächen, insbesondere bei einer additiven Fertigung, mittels eines CO₂-Partikelstrahls, insbesondere mit einer Vorrichtung (1) gemäß einem der Ansprüche 1 bis 11, wobei einer Düseneinrichtung (2) über einen Zuführkanal (7) flüssiges CO₂ zugeführt wird, und das CO₂ in einem Expansionsabschnitt expandiert wird, und dabei zu CO₂-Partikeln und gasförmigem CO₂ umgewandelt wird, wobei eine Absaugeinrichtung (3) einen Unterdruck erzeugt, sodass ein entsprechender Volumenstrom bereitgestellt wird, um gelöste Schmutzpartikel in einem Absaugbereich abzusaugen.

14. Verfahren gemäß Anspruch 13, **dadurch gekennzeichnet,**
**dass** die Düseneinrichtung (2) den CO₂-Partikelstrahl im Wesentlichen in einer in Axialrichtung der Düseneinrichtung (2) verlaufenden Hauptstrahlrichtung abgibt, wobei diese Hauptstrahlrichtung gegenüber einer Oberfläche des zu reinigenden Gegenstands in Reinigungsrichtung einen Winkel im Bereich von 15° bis 75° bzw. 25° bis 65° bzw. 35° bis 55° aufweist.

15. Verfahren gemäß Anspruch 14, **dadurch gekennzeichnet,**
**dass** die Absaugeinrichtung (3) den Volumenstrom im Wesentlichen in einer in Axialrichtung der Absaugeinrichtung (3) verlaufenden Hauptabsaugrichtung abgibt, wobei diese Hauptabsaugrichtung gegenüber der Oberfläche des zu reinigenden Gegenstands entgegen der Reinigungsrichtung einen Winkel im Bereich von 15° bis 75° bzw. 25° bis 65° bzw. 35° bis 55° aufweist.
